# EUROPEAN PATENT APPLICATION

(11) **EP 3 431 166 A1**
(43) Date of publication of application: **23.01.2019**
(21) Application number: 18183103.3
(22) Date of filing: 12.07.2018
(51) Int. Cl.: B01D 53/26, F24F 3/14

(54) **APPARATUS FOR DRYING A COMPRESSED GAS AND THE METHOD THEREOF**

(30) Priority: 19.07.2017 IT 201700082293
(71) Applicant: Parker Hannifin Emea S.A.R.L., 1163 Etoy (CH)
(72) Inventor: FAVERO, Chiara, 35010 Vigonza (IT)
(74) Representative: Gonella, Mario

(57) **Abstract**

The present invention relates to an apparatus for drying a compressed gas, particularly a refrigerating type apparatus, comprising a gas circuit (7; 107; 207; 307) wherein a compressed gas circulates, comprising a gas/gas exchanger (2; 102; 202; 302) and a first evaporator (3; 103; 203; 303), and a refrigerant circuit (8; 108; 208; 308) wherein a refrigerant circulates, comprising a compressor (4; 104; 204; 304), a condenser (5; 105; 205; 205; 305), a main expansion unit (6; 106; 206; 306) and the first evaporator (3; 103; 203; 303), such that the first evaporator (3; 103; 203; 303) is able to carry out a first heat exchange between the compressed gas and the refrigerant, The apparatus further comprises at least a second evaporator (9; 109, 117; 209, 217; 309) connected both to the gas circuit (7; 107; 207; 307) and to the refrigerant circuit (8; 108; 208; 308) and arranged in series downstream of the first evaporator (3; 103; 203; 303). The second evaporator (9; 109, 117; 209, 217; 309) is adapted to carry out a second heat exchange between said compressed gas and the refrigerant. The refrigerant circuit (8; 108; 208; 308) further comprises a secondary expansion unit (10; 110; 210) interposed between the first evaporator (3; 103; 203; 303) and the second evaporator (9; 109, 117; 209, 217).

## Description

### TECHNICAL FIELD OF THE INVENTION

The present invention relates to an apparatus for drying a compressed gas, particularly a refrigerating type apparatus, and the control method thereof.

### STATE OF THE ART

A compressed gas drying apparatus has the purpose of extracting the moisture from a given flow of compressed gas, such as compressed air, exiting from a compressor.

The gas flow exiting from the final stage of a compressor in effect contains a quantity of water in the form of vapor which may condense and promote the formation of rust due to oxidation on contact with metal elements. The presence of humidity is therefore the main cause of corrosion of pipes or malfunctioning of machines that use compressed gas and may generate even more serious problems such as sudden breakage of the pipes or the complete failure of the machines.

It is thus necessary to eliminate as much as possible the water content from the mass of compressed gas before it is supplied to the user equipment.

A compressed gas drying apparatus of the refrigerating type is essentially a refrigerating machine suitable to extract moisture from a compressed gas through a refrigerating cycle that provides for a gas/gas exchanger that cools the entering wet gas with the exiting dry gas, an evaporator belonging to a refrigerant circuit wherein the gas is further cooled by the evaporation of a refrigerant, through physical phenomena known per se. Lowering the temperature involves the condensation of almost all the water vapor contained in the gas; the condensate is then separated and discharged into a condensate separator through which the substantially moisture-free gas travels, which, before exiting to be supplied to the user, passes through the gas/gas exchanger to cool the entering wet gas.

The refrigerant circuit typically envisages, in succession, the evaporator mentioned above, a compressor for the refrigerant, a condenser and an expansion capillary.

EP 1293243 and EP 2688660 in the name of the same Applicant show two examples of compressed gas refrigeration dryers and the control methods or systems thereof.

A limitation of such apparatuses lies in the fact that the temperature of the gas during drying must not fall below 0°C to prevent ice from forming in the condensate, which may lead to breakage or damage to the evaporator.

Consequently, also the dew point temperature, which must be kept as low and constant as possible, must remain above 0°C.

However, the need to reach a dew point below 0°C is particularly felt in the winter. For example, a compressed gas, such as compressed air, conveyed in a pipe - or a section thereof - placed outside a plant, and then subjected to extreme environmental conditions, may easily reach temperatures much lower than 0°C and a conventional refrigeration dryer is not able to prevent ice from forming in the condensate.

An attempt to overcome this drawback is provided by the aforementioned patent EP 1293243, which provides for the use of two compressors connected in parallel with each other wherein the speed of at least one of the two compressors is controlled by an "inverter". The two compressors may work simultaneously or alternately depending on the temperature of the refrigerant entering the evaporator, the evaporator surface temperature, or the evaporating pressure of the refrigerant, so as to maintain the temperature of the refrigerant higher than 0°C.

In order to avoid the formation of ice, a short "hot gas" flow upstream of the evaporator is provided for short periods. The "hot gas" flow is taken from the flow of refrigerant leaving the compressors and is controlled by a stabilizing valve which intervenes when the pressure or the temperature reaches hazardous values such as to allow the formation of ice in the evaporator.

The known dryer described above, which is in any case complex in design and construction, thus allows one to obtain a temperature of the exiting dry gas close to 0°C with a dew point close to 0°C, but still not significantly lower.

To obtain dew point values significantly lower than 0°C, other types of dryers are also known, such as, for example, adsorption or membrane dryers, which, however, have high energy consumption and considerable investment costs.

### TECHNICAL PROBLEM

It would therefore be desirable to have a dryer which allows one to obtain dew point temperature values of the exiting dry gas significantly lower than 0°C, indicatively down to -15°C to -20°C, without condensed moisture giving rise to hazardous ice formations in the evaporator.

### SUMMARY OF THE INVENTION

The main task of the present invention is to overcome the drawbacks of the prior art by devising an apparatus for drying compressed gas, in particular a refrigerating type apparatus, and a control method thereof, which allows one to obtain dew point temperature values of the dry gas output which are considerably lower than 0°C, indicatively as low as -15°C to -20°C, without the condensed humidity giving rise to hazardous formations of ice in the evaporator.

Within the scope of the aforementioned task, an object of the present invention is to devise an apparatus for drying compressed gas that is improved and simplified both in design and construction.

Another object is to provide a compressed gas drying apparatus with high efficiency and productivity, while at the same time achieving considerable energy savings.

Not least, the object is to devise an apparatus for drying compressed gas, in particular a refrigerating type apparatus, and a control method thereof, which achieve the aforementioned aim and objects at competitive costs and by using the usual and known apparatuses, machinery and equipment.

The aforementioned aim and objects, and others which will be better described in the following description, are achieved by a compressed gas drying apparatus as defined in claim 1 and a control method as defined in claims 8 and 9.

### BRIEF DESCRIPTION OF THE FIGURES

Further features and advantages of the present invention will become more apparent from the following description of some specific, but non-exclusive, embodiments, illustrated purely by way of non-limiting example with reference to the accompanying figures, wherein:
- figure 1 schematically represents an apparatus for drying compressed gas according to the present invention;
- figure 2 is a block diagram of a control method of the apparatus according to fig. 1;
- figure 3 schematically represents a second embodiment of an apparatus for drying compressed gas according to the present invention;
- figure 4 is a block diagram of a control method of the apparatus according to fig. 3;
- figure 5 schematically represents a third embodiment of the apparatus according to the present invention;
- figure 6 is a block diagram of a control method of the apparatus according to fig. 5;
- figure 7 schematically represents a fourth embodiment of the apparatus according to the present invention;
- figure 8 is a block diagram of a control method of the apparatus according to fig. 7;
- figure 9 schematically represents a fifth embodiment of the apparatus according to the present invention;
- figure 10 is a block diagram of a control method of the apparatus according to fig. 9;
- figure 11 schematically represents a sixth embodiment of the apparatus according to the present invention;
- figure 12 is a block diagram of a control method of the apparatus according to fig. 11;
- figure 13 schematically represents a seventh embodiment of the apparatus according to the present invention;
- figure 14 is a block diagram of a control method of the apparatus according to fig. 13;

### DETAILED DESCRIPTION OF THE INVENTION

The gas subjected to the drying treatment in the apparatus according to the present invention is generally, but not necessarily, compressed air for use in various applications. Naturally, other types of compressed gas may also be treated with the present system.

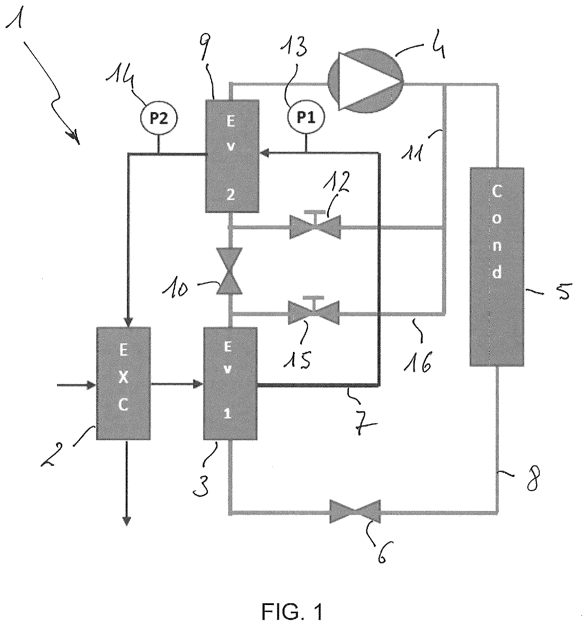

With reference to the aforementioned figures, figure 1 shows schematically a compressed gas drying apparatus of the refrigerating type indicated collectively at reference number 1 and comprising, according to the prior art:
- a gas/gas exchanger 2,
- a first evaporator 3,
- a compressor 4,
- a condenser 5,
- a main expansion unit 6.

As is known, the path of the compressed gas, defined by the gas circuit 7, provides for the entry of the wet gas into the exchanger 2, where it is subjected to a first cooling by heat exchange with the exiting dry gas, and then enters into the first evaporator 3 where it is further cooled by the evaporation of a refrigerant circulating in the refrigerant circuit 8, better explained hereinafter. Lowering the temperature involves the condensation of almost all the water vapor contained in the gas; the condensate is then separated and discharged into a condensate separator (not represented) through which travels the substantially moisture-free gas, which, before leaving to be supplied to the user, passes through the gas/gas exchanger 2 to cool the entering wet gas.

According to a conventional refrigerating cycle, the cooling fluid exiting the first evaporator 3 is subjected, along the refrigerant circuit 8, to a compression in the compressor 4 and subsequently is cooled in the condenser 5 and passes into the main expansion unit 6 to re-enter the first evaporator 3.

As already mentioned in the introductory part of the present description, the dew point temperature of the gas which may be obtained with a conventional refrigeration system as described above, may not fall below 0°C, for the reasons outlined above, and normally is around +3°C. At these conditions of water saturation, the percentage of condensate that may be separated from the gas is around 88%, approximately equal to 4.8 g/Nm³.

The idea underlying the present invention is that of lowering the dew point temperature, and consequently the temperature of the gas to be dehumidified, to values significantly below 0°C in order to remove a greater percentage of condensate without the risk that condensed water vapor may give rise to the uncontrolled formation of ice in the evaporator, causing serious problems of reduced efficiency in the heat exchange until the evaporator bursts.

For this purpose, the apparatus of the present invention comprises a second evaporator 9, or a second evaporation stage, arranged in series with and downstream of the first evaporator 3; between the first evaporator 3 and the second evaporator 9, or between the first and the second evaporation stage, is interposed a secondary expansion unit 10 along the refrigerant circuit 8. As is evident from figure 1, the second evaporator 9 is arranged downstream of and in series with the first evaporator 3, both on the side of the gas circuit 7 and on the side of the refrigerant circuit 8.

The wet gas which passes through the first evaporator 3 then undergoes a first drying at a dew point temperature higher than 0°C, normally at values between +3°C and +5°C, so as to separate a percentage of water equal to about 88% (about 4.8 g/Nm³), as mentioned above. Advantageously, the condensate formed in the first evaporator 3 may be separated in a first condensate separator (not shown) and discharged to the outside.

The partially dry gas continues along the circuit 7 to pass through the second evaporator 9 where it is further dried at a dew point temperature of -15°C to -20°C to remove the residual moisture content, equal to about 0.712 g/Nm³, which is separated and discharged into a second condensate separator (not shown); alternatively, a single condensate separator may be provided at the outlet of the second evaporator 9 for the removal of all the separated water vapor during the drying process. Subsequently, the dry gas, before being sent out to the user, passes through the gas/gas heat exchanger 2 to perform a first cooling of the entering wet gas.

To prevent the formation of ice in the second evaporator 9 by the residual condensate, a defrosting cycle is envisaged, better known as the "defrost" cycle as will also be indicated hereinafter, which prevents or controls the formation of ice to within non-hazardous limits.

For this purpose, the refrigerant circuit 8 comprises a defrosting circuit 11 configured as a deviation of the refrigerant circuit 8 downstream of the compressor 4 and connected again to the refrigerant circuit 8 upstream of the inlet of the second evaporator 9; the defrosting cycle is actuated by opening and closing a defrost valve 12 interposed in the defrosting circuit 11 and controlled by the pressure difference ΔP between the pressure P1 of the gas entering in the second evaporator 9 and the pressure P2 of the gas exiting from the same evaporator 9. In effect, when the condensate starts to freeze, there is a loss of pressure in the compressed gas at the outlet, and therefore a decrease in pressure P2, due to the reduced heat exchange capacity with the refrigerant due to the formation of ice on the walls of the second evaporator 9.

The pressure values P1 and P2 are measured by appropriate pressure sensors 13, 14 arranged in the gas circuit 7 respectively upstream and downstream of the second evaporator 9.

A stabilization valve 15 is also provided in the refrigerant circuit 8 arranged along a deviation 16 from the outlet of the compressor 4, which is connected to the refrigerant circuit 8 downstream of the first evaporator 3, which has the task of keeping the working conditions of the first evaporator 3 stable, i.e. pressure and temperature not lower than 0°C, when the apparatus operates with no load or with partial load; the stabilization of the working conditions occurs through the introduction into the gas circuit 7 of a small flow of refrigerant at high temperature exiting from the compressor 4. In other words, the valve 15 performs a safety function by stabilizing the working conditions of the apparatus even at partial loads to prevent the risk of ice forming in the first evaporator 3.

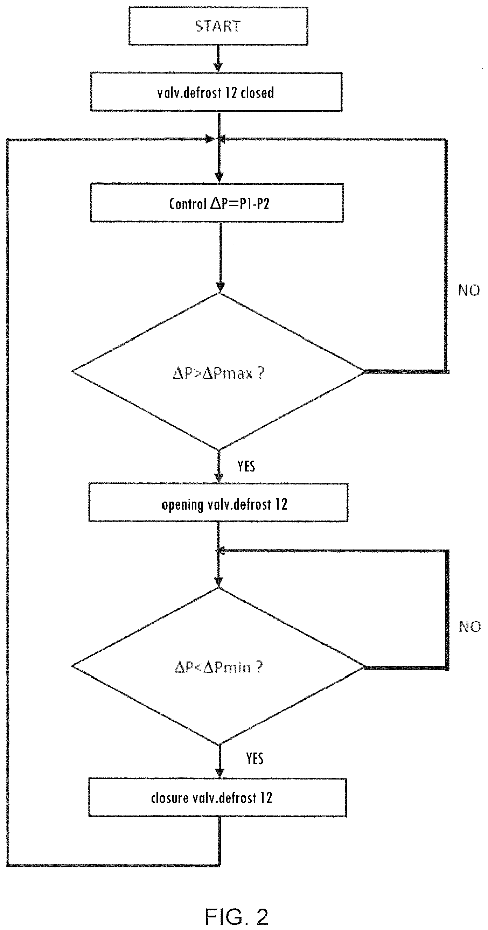

Figure 2 shows the block diagram of the defrosting cycle control method: starting from the initial condition (START), wherein the defrost valve 12 is closed, the pressure difference ΔP = P1- P2 is controlled continuously by means of suitable control means, not shown, on the basis of the pressure values P1 and P2 detected respectively by the sensors 13, 14; if the difference is lower than a pre-defined maximum value ΔPₘₐₓ (ΔP> ΔPₘₐₓ? NO) the drying process continues normally, as there is no pressure drop and consequently the condensate is not icing. If, on the other hand, ΔP is greater than the pre-defined value (ΔP> ΔPₘₐₓ? YES), it means that ice is forming inside the second evaporator 9 and therefore the defrosting cycle is started by opening the defrost valve 12. In this way, a part of the refrigerant exiting the compressor 4 at a nominal temperature of about 60-70°C is diverted along the defrosting circuit 11 and sent through the valve 12 to the second evaporator 9 to heat it and melt the ice in the process of forming and/or already formed. The defrosting cycle continues until ΔP falls below a pre-defined minimum ΔPₘᵢₙ (ΔP <ΔPₘᵢₙ? YES). At this point the defrost valve 12 is closed and the defrosting cycle ends. It should be noted that, during the defrosting cycle, the compressed gas drying process continues normally without interruption.

From the foregoing it is therefore evident that the present invention achieves the initially intended objects and advantages: an apparatus has been devised for drying compressed gas, in particular a refrigerating type apparatus, and a control method thereof, which allows dew point temperature values of the exiting dry gas to be obtained which are considerably lower than 0°C, indicatively as low as -15 °C to -20°C, without the condensed moisture giving rise to hazardous ice formation in the second evaporator 9 .

Such an apparatus is also extremely simple both in terms of design and construction.

A further advantageous aspect of the system according to the present invention lies in its high efficiency and productivity, since the normal compressed gas drying process continues without interruption even during the defrosting cycle. Moreover, the lower temperature of the compressed dry gas entering the heat exchanger 2 allows the latter to work with a higher efficiency compared to the refrigeration dryers currently known due to the lower working temperature.

The greater efficiency of the apparatus also entails considerable energy savings, while the simplification of the construction and of the working cycle allows the maintenance and capital costs of the apparatus to be reduced, in particular with respect to the known adsorption dryers.

Naturally, the present invention is adaptable to numerous applications, modifications or variations without thereby leaving the protective scope as defined by the independent claim 1 of the apparatus and 8 and 9 of the control method.

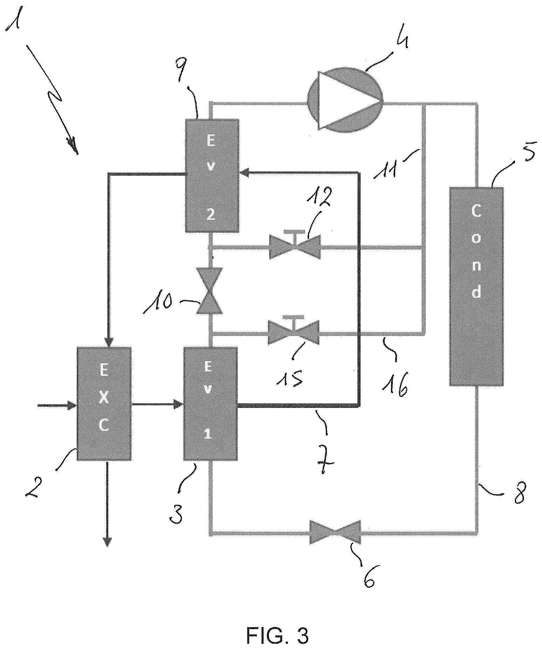

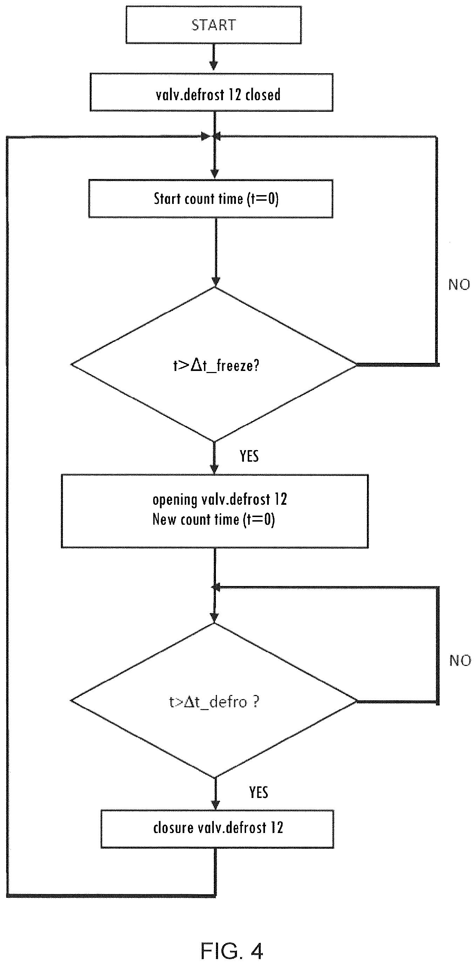

For example, figures 3 and 4 schematically show a second embodiment of an apparatus for drying compressed gas according to the present invention (fig. 3) and the relative control method of the defrosting cycle (fig. 4).

Constructively, the second embodiment illustrated in figure 3 is substantially identical to the preceding one of figure 1, with the exception of the replacement of the pressure sensors with a timer, as will be better explained hereinafter. Therefore, in the following discussion, and in the accompanying figures relating to the second embodiment, the same numeric references of the first embodiment will be used for the same elements.

With respect to the preceding one, in this embodiment, the control on whether or not to activate the defrosting cycle is based on the period of time elapsed between one cycle and the other. As already mentioned above, the apparatus of figure 3 is therefore substantially similar to the preceding one of figure 1, where a timer (not shown) replaces the pressure sensors.

The following time intervals are pre-defined in the timer:
- Δt_freeze, corresponding to the period between one defrosting cycle and the next one evaluated experimentally on the basis of the time that passes between the end of a defrosting cycle and the start of ice formation in the second evaporator 9;
- Δt_defro, corresponding to the duration of the defrosting cycle, also evaluated experimentally.

In the initial step (START) with the defrost valve 12 closed, the timer starts counting the time t elapsed until the pre-defined value Δt_freeze, where, by opening the defrost valve 12, the defrosting cycle is started for the period of time Δt_defro, always controlled by the timer. At the end of this period the valve 12 is closed and the normal process of drying the compressed gas continues, which was, however, never interrupted during the defrosting cycle.

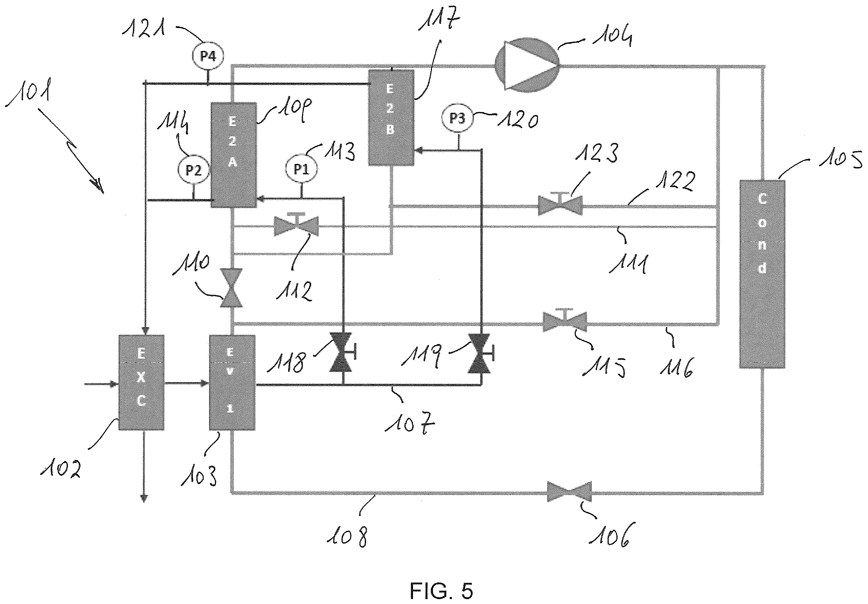

A third embodiment of the system, generally indicated at 101 and illustrated in figure 5, comprises, similarly to the previous ones:
- a gas/gas exchanger 102,
- a first evaporator 103 (or a first evaporation stage),
- a compressor 104,
- a condenser 105,
- a main expansion unit 106,
- a gas circuit 107,
- a refrigerant circuit 108,
- a secondary expansion unit 110 arranged along the refrigerant circuit 108 downstream of the first evaporator 103,
- a stabilization valve 115 arranged along a deviation 116 of the refrigerant circuit 108.

The apparatus 101 further comprises a second evaporator 109 and a third evaporator 117 arranged in parallel with each other along the gas circuit 107 downstream of the first evaporator 103. The gas flow between the first evaporator 103 and, respectively, the second and third evaporators 109, 117 is respectively controlled by a first shut-off valve 118 and by a second shut-off valve 119.

The pressure difference (P1 - P2) of the gas between the inlet (P1) and outlet (P2) in the second evaporator 109, which will be indicated at ΔPA, is measured and controlled by appropriate first pressure sensors 113, 114. Similarly, the pressure difference (P3 - P4) of the gas between the inlet (P3) and outlet (P4) in the third evaporator 117, which will be indicated at ΔPB, is measured and controlled by appropriate second pressure sensors 120, 121.

The second evaporator 109 and the third evaporator 117 are respectively connected to a first defrosting circuit 111 and to a second defrosting circuit 122, configured as deviations of the refrigerant circuit 108 downstream of the compressor 104 and connected again to the refrigerant circuit 108 upstream of the second evaporator 109 and of the third evaporator 117, respectively. The defrosting cycles are performed, in the second evaporator 109, by opening and closing a first defrost valve 112 controlled by the pressure difference ΔPA and, in the third evaporator 117, by opening and closing a second defrost valve 123 controlled by the pressure difference ΔPB.

Naturally, the second evaporator 109 and the third evaporator 117 may be configured as a second evaporation stage with respect to the first evaporation stage composed of the first evaporator 103.

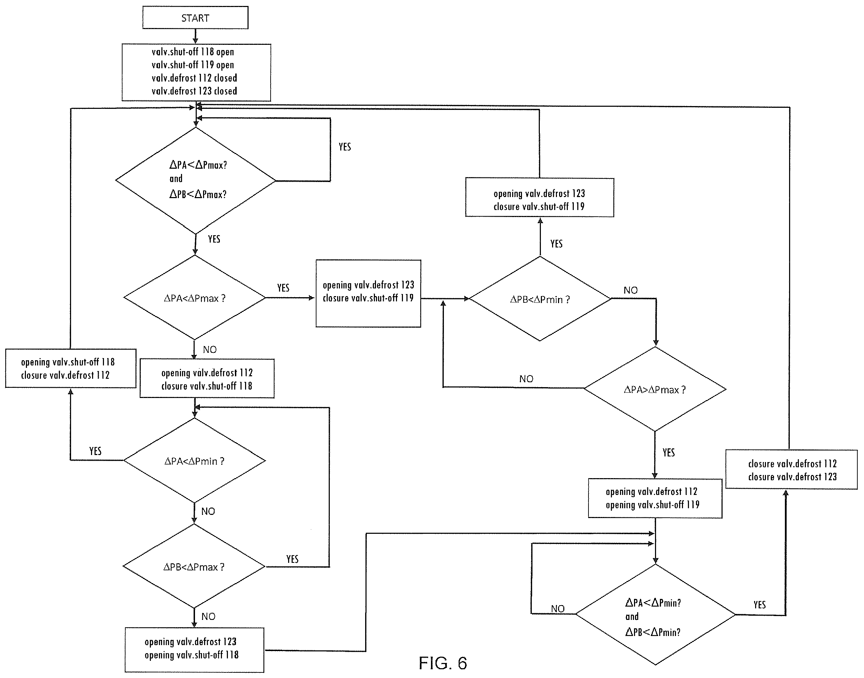

Figure 6 shows the block diagram of the control method of the defrosting cycle of this third embodiment of the apparatus: starting from the initial condition (START), wherein the first shut-off valve 118 and the second shut-off valve 119 are open whereas the first defrost valve 112 and the second defrost valve 123 are closed, the pressure differences ΔPA = P1- P2 in the second evaporator 109 and ΔPB = P3- P4 in the third evaporator 117 are controlled continuously, by means of appropriate control means not shown, with respect to a maximum pre-defined value ΔPₘₐₓ; if ΔPA and ΔPB are both lower than ΔPₘₐₓ (ΔPA<ΔPₘₐₓ and ΔPB<ΔPₘₐₓ) the drying process continues normally. If, on the other hand, one of the two values is higher, the following are checked in sequence first ΔPA (APA<APₘₐₓ?) And then ΔPB (ΔPB<ΔPₘₐₓ?). If ΔPA <ΔPₘₐₓ, the process continues in the second evaporator 109, while the second shut-off valve 119 is closed and the second defrost valve 123 is opened to stop the flow of gas in the third evaporator 117 and to start the defrosting cycle in the latter until ΔPB falls below a pre-defined minimum value ΔPₘᵢₙ(ΔPB <ΔPₘᵢₙ) and the cycle ends with the closing of the second defrost valve 123 and the opening of the second shut-off valve 119 to restore the flow of gas in the third evaporator 117.

If instead ΔPA>ΔPₘₐₓ, the process continues in the third evaporator 117 while the defrosting cycle is started in the second evaporator 109 through the closure of the first shut-off valve 118, to stop the gas flow in the second evaporator 109, and the opening of the first defrost valve 112 until ΔPA falls below the pre-defined minimum value ΔPₘᵢₙ(ΔPA <ΔPₘᵢₙ); the cycle ends with the closing of the first defrost valve 112 and the opening of the first shut-off valve 118 to restore the gas flow in the second evaporator 109.

During the defrosting cycle in one of the two evaporators 109, 117 is constantly controlled even if the pressure difference in the other evaporator remains lower than ΔPₘₐₓ or if this condition undergoes variations. For example, if a defrosting cycle is running in the third evaporator 117 and it happens that ΔPA is greater than ΔPₘₐₓ (ΔPA>ΔPₘₐₓ?), the defrosting cycle is also launched in the second evaporator 109 through the operations described above until the conditions ΔPA<ΔPₘᵢₙ and ΔPB<ΔPₘᵢₙ are met and both shut-off valves 118, 119 are opened.

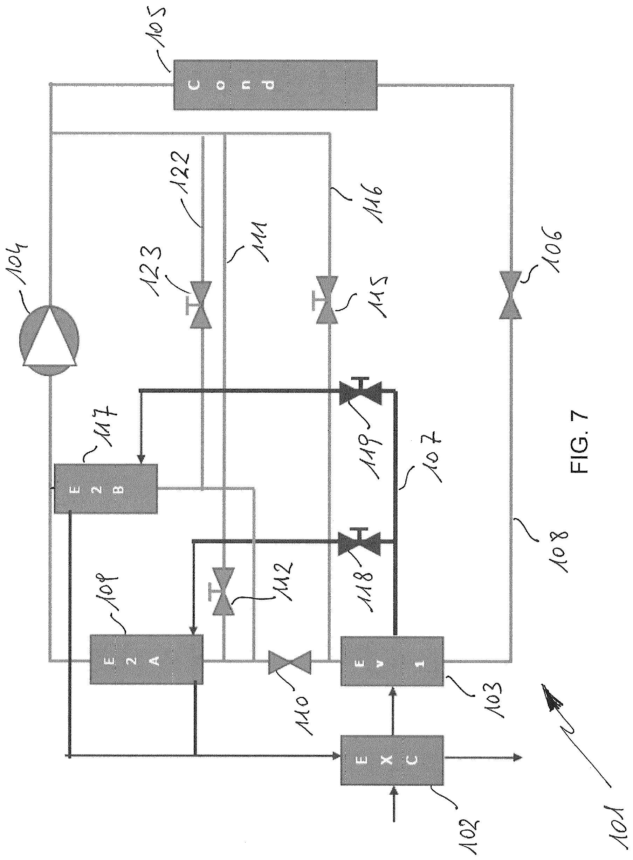

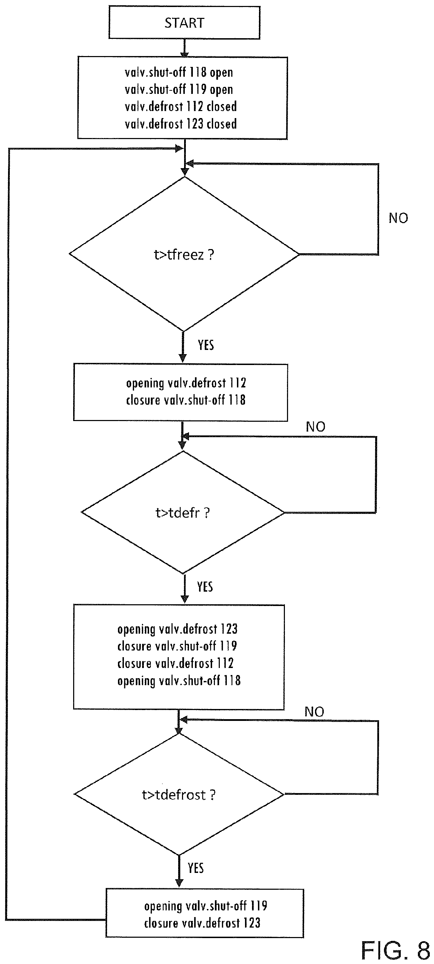

A fourth embodiment of an apparatus according to the present invention, illustrated in figures 7 and 8 wherein the same numeric references of the preceding embodiment have been used for the components in common, is structurally similar to the preceding embodiment of figure 5, with the sole difference that the duration of the defrosting cycles and the period between one cycle and another is determined based on time, for example by using a timer, rather than on the basis of pressure differences. There are thus no pressure sensor means at the inlet and outlet of the second and third evaporators 109, 117. The block diagram of figure 8 describes the control method which is substantially similar to that already described for the second embodiment and illustrated in figure 4, wherein the time count is carried out for both the evaporators 109, 117. In particular:
- in the initial step (START) both shut-off valves 118, 119 are open and the second evaporator 109 and the third evaporator 117 work simultaneously for a pre-defined period of time, indicated by "tfreez";
- when the tfreez period is exceeded (t>tfreez), a defrosting step is started in the second evaporator 109, with the closure of the valve 118 and the opening of the defrost valve 112, which has a first pre-defined time interval indicated at "tdefr", while the third evaporator 117 continues the drying cycle normally;
- at the end of the first time interval tdefr (t>tdefr), the second evaporator 109 resumes the normal drying cycle while the defrosting step is started in the third evaporator 117 with the duration of a second pre-defined time interval "tdefrost"; the second shut-off valve 119 is then closed and the second defrost valve 123 is opened, while the first defrost valve 112 is closed and the first shut-off valve 118 is opened to allow resumption of the drying cycle in the second evaporator 109;
- at the end of the second time interval tdefrost (t>tdefrost), also the third evaporator 117 resumes the normal drying cycle, with the closing of the second defrost valve 123 and the opening of the second shut-off valve 119;
- the drying cycle then continues on both evaporators 109, 117 for a subsequent pre-defined period tfreez.

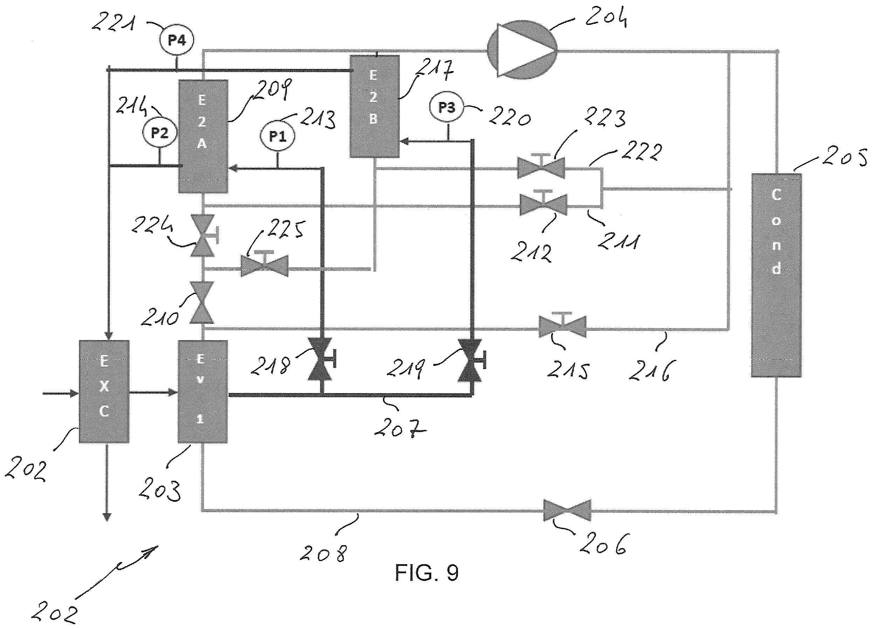

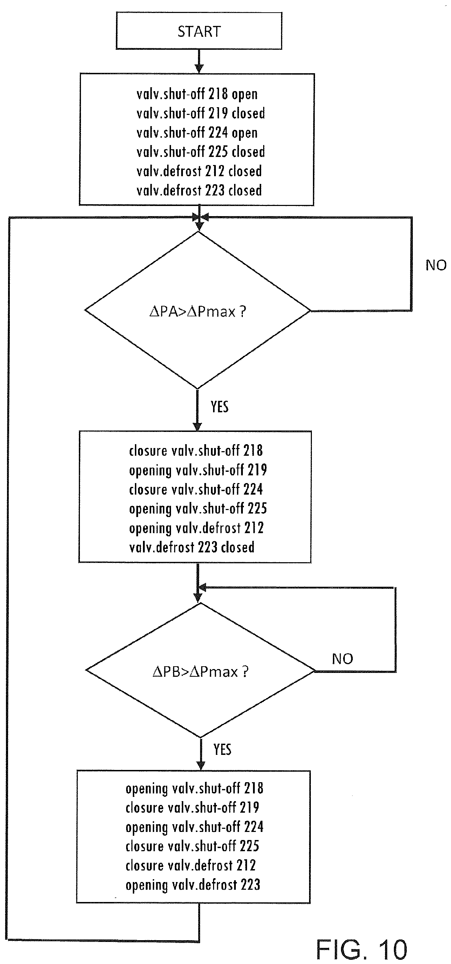

A fifth embodiment, shown in figures 9 and 10, is structurally similar to the embodiment of figure 5, and comprises:
- a gas/gas exchanger 202,
- a first evaporator 203 (or a first evaporation stage),
- a compressor 204,
- a condenser 205,
- a main expansion unit 206,
- a gas circuit 207,
- a refrigerant circuit 208,
- a secondary expansion unit 210 arranged along the refrigerant circuit 208 downstream of the first evaporator 203,
- a stabilization valve 215 arranged along a deviation 216 of the refrigerant circuit 208,
- a second evaporator 209 and a third evaporator 217 arranged in parallel with each other along the gas circuit 207 downstream of the first evaporator 203,
- a first shut-off valve 218 and a second shut-off valve 219 for controlling the gas flow between the first evaporator 203 and, respectively, the second and third evaporators 209, 217,
- first pressure sensors 213, 214 adapted to control by the pressure difference of the gas ΔPA = (P1 - P2) between the inlet (P1) and outlet (P2) in the second evaporator 209,
- second pressure sensors 220, 221 adapted to control by the pressure difference of the gas ΔPB = (P3 - P4) between the inlet (P3) and outlet (P4) in the third evaporator 217,
- a first defrosting circuit 211 and a second defrosting circuit 222 connected respectively to the second evaporator 209 and to the third evaporator 217,
- a first defrost valve 212 controlled by the pressure difference ΔPA in the second evaporator 209 and a second defrost valve 223 controlled by the pressure difference ΔPB in the third evaporator 217.

In the refrigerant circuit 208, a third shut-off valve 224 and a fourth shut-off valve 225 are moreover inserted arranged downstream of the secondary expansion unit 210 and adapted to control the flow of the entering refrigerant respectively in the second evaporator 209 and in the third evaporator 217.

As illustrated in the block diagram of figure 10, which schematically represents the control method of the apparatus, the drying process in the initial step (START) is carried out solely by the first evaporator 203 and the second evaporator 209, and thus with the first and third shut-off valves 218, 224 open and the second and fourth shut-off valves 219, 225 closed, until the second evaporator 209 is subjected to a defrosting cycle when the pressure difference ΔPA=P1-P2 exceeds the predetermined value ΔPₘₐₓ (ΔPA> ΔPₘₐₓ). At this point the drying process is switched to the third evaporator 217 through the closing of the first and third shut-off valves 218, 224 and the opening of the second and fourth shut-off valves 219, 225, while the second evaporator 209 is defrosted by opening the first defrost valve 212.

Naturally, the process is symmetrical for the third evaporator 217, wherein the defrosting cycle is activated when ΔPB (= P3-P4)>ΔPₘₐₓ.

The operation of the defrost valves 212, 223 is similar to that already described above, opening at the activation of the defrosting cycle.

Naturally, also in this case, the second evaporator 209 and the third evaporator 217 may be configured as a second evaporation stage with respect to the first evaporation stage composed of the first evaporator 203.

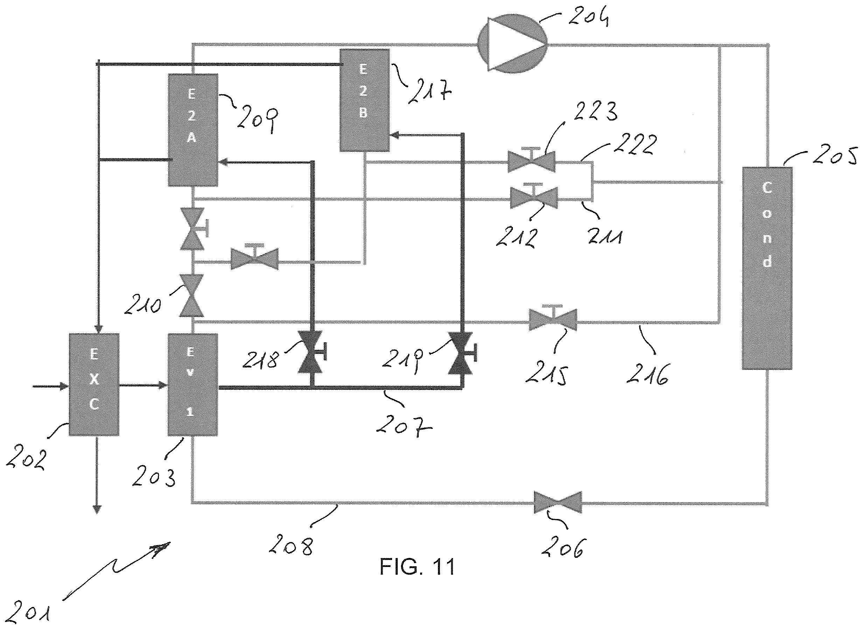

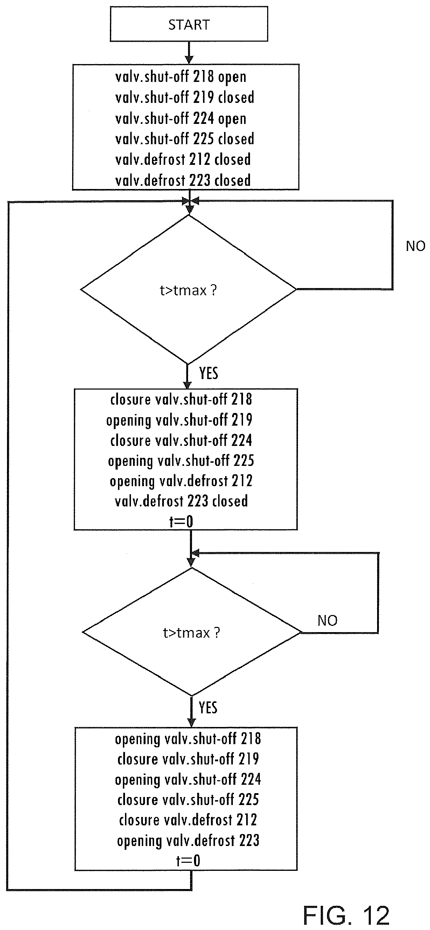

A sixth embodiment of an apparatus according to the present invention, illustrated in figures 11 and 12, is structurally similar to the preceding embodiment of figure 9, and thus the same numeric references of the preceding embodiment have been used for the components in common, with the sole difference that the duration of the defrosting cycles and the period between one cycle and the other is determined based on time, for example by using a timer, rather than on the basis of pressure differences. There are therefore no pressure sensor means at the inlet and outlet of the second and third evaporators 209, 217. The block diagram of figure 12 describes the control method, functionally similar to that of the preceding embodiment and wherein the drying cycle alternates between the second evaporator 209 and the third evaporator 217 with switching to one of the two when the other is in the defrosting step, is controlled by a pre-defined time period tmax. More precisely:
- in the initial step (START) only the second evaporator 209 works in drying for a first pre-defined period of time tmax:
- at the end of tmax (t>tmax), the second evaporator 209 proceeds to the defrosting step and the third evaporator 217 begins to work in drying for a second pre-defined period of time tmax;
- at the end of the second period tmax (t>tmax) the second evaporator 209 resumes the drying cycle while the third evaporator 217 proceeds to the defrosting step for a further period tmax when the second evaporator 209 proceeds to the defrosting step and the third evaporator 217starts to work.

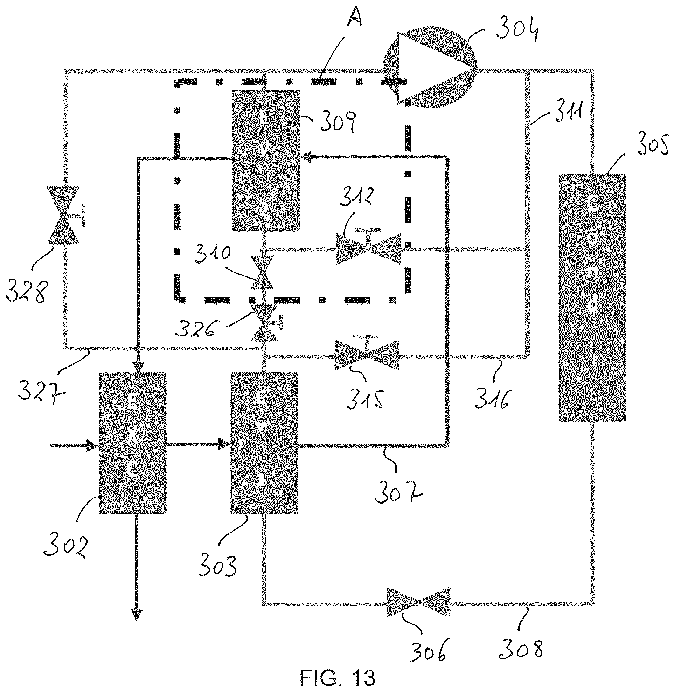

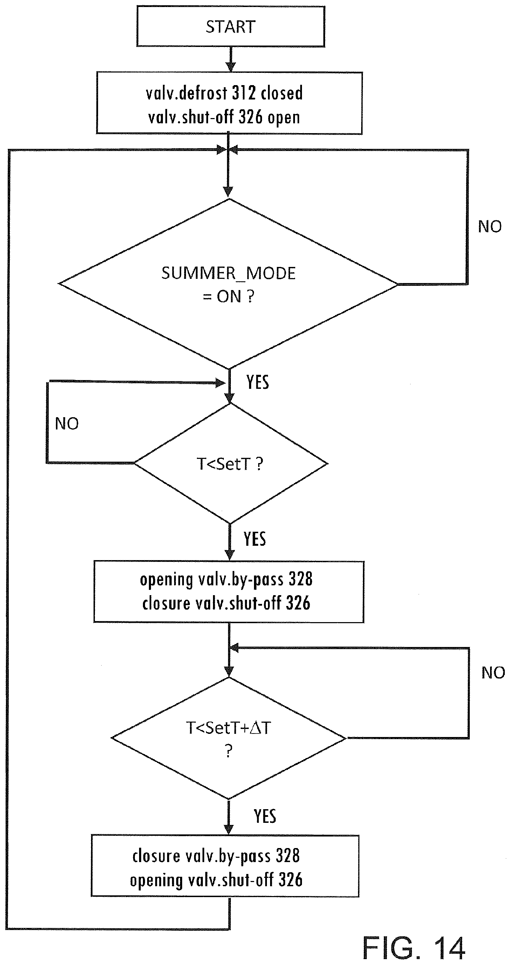

A seventh embodiment of the system according to the present invention, illustrated in figures 13 and 14, refers to the provision of a "summer" mode, hereinafter also referred to as "summer mode" according to the current terminology in this technological sector, which may be implemented in any of the previously described embodiments.

In effect, the portion delimited by the dashed line in figure 13, indicated at A, may comprise a single second evaporator 309, a secondary expansion unit 310 upstream of the second evaporator 309 and a defrost valve 312 (as illustrated in the figure) or two evaporators in parallel with the valves, circuits and controls thereof, as specified with reference to the embodiments of figures 1 to 12. Also, the methods for controlling the activation of the defrosting cycle may be indifferently based on the pressure difference of the gas between the inlet and outlet from the second evaporator 309 or on the time elapsed between one cycle and the other, as described for the preceding embodiments.

According to the "summer mode", in the refrigerating circuit 308, a fifth shut-off valve 326 is preferably provided between the outlet of the first evaporator 303 and the inlet of the secondary expansion unit 310; upstream of the fifth shut-off valve 326, from the refrigerant circuit 308 is diverted a by-pass circuit 327 controlled by a by-pass valve 328 and connected to the inlet of the compressor 304 to rejoin the main refrigerant circuit 308.

The fifth shut-off valve 326 may also not be present, since the pressure drops should force the refrigerant to pass preferentially through the by-pass circuit 327. The possible presence of the fifth shut-off valve 326 encourages safety if the natural effect of the pressure drops is not sufficient to guarantee the deviation of the refrigerant through the by-pass circuit 327.

The "summer mode" is advantageous when very extreme dew point temperature drops are not required, for example in the presence of very high outdoor temperatures such as in the summer. The passage of the refrigerant in the second evaporator 309, or in the second evaporation stage (with reference to both the single second evaporator 309 and to the second and third evaporator 109, 117, 209, 217 of the preceding embodiments) is therefore not necessary and is by-passed.

According to the block diagram represented in figure 14, the control method for checking whether or not the by-pass circuit 327 has been activated once the "summer mode" is activated in the apparatus (SUMMER_MODE=ON) is based on the detection of the temperature T of the refrigerant in the refrigerant circuit 308 at the outlet of the first evaporator 303 and on the comparison of such value with respect to a pre-defined maximum value SetT.

If T>SetT, the process continues normally, with the fifth shut-off valve 326 open and the by-pass valve 328 closed to allow the flow of the refrigerant also in the second evaporation stage. When T<SetT, the fifth shut-off valve 326 is closed and the by-pass valve 328 open so that the refrigerant circulates along the by-pass circuit 327 without passing through the second evaporation stage. Once the value T>SetT+ΔT is restored, the process resumes regularly and the by-pass circuit 327 is closed. ΔT is a pre-defined temperature differential value to avoid fluctuations in the electronic control system, which otherwise would activate the by-pass circuit again as soon as the temperature falls below the pre-defined maximum value SetT. The "summer mode" therefore allows one to obtain a further energy savings of the system, avoiding a second expansion and consequent heating of the refrigerant.

Naturally, the materials and equipment used for the production of the present invention, as well as the shapes and sizes of the individual components, may be those most suitable according to the specific requirements.

## Claims

1. Apparatus for drying a compressed gas, particularly a refrigerating type apparatus, comprising a gas circuit (7; 107; 207; 307) wherein a compressed gas circulates, said gas circuit (7; 107; 207; 307) comprising a gas/gas heat exchanger (2; 102; 202; 302) and a first evaporator (3; 103; 203; 303), and a refrigerant circuit (8; 108; 208; 308) wherein a refrigerant circulates, said refrigerant circuit (8; 108; 208; 308) comprising a compressor (4; 104; 204; 304), a condenser (5; 105; 205; 205; 305), a main expansion unit (6; 106; 206; 306) and said first evaporator (3; 103; 203; 303), such that said first evaporator (3; 103; 203; 303) is able to carry out a first heat exchange between said compressed gas and said refrigerant, **characterized in that** it further comprises at least a second evaporator (9; 109, 117; 209, 217; 309) connected both to said gas circuit (7; 107; 207; 307) and to said refrigerant circuit (8; 108; 208; 308) and arranged in series to, and downstream, said first evaporator (3; 103; 203; 303), said at least a second evaporator (9; 109, 117; 209, 217; 309) being adapted to carry out a second heat exchange between said compressed gas and said refrigerant, said refrigerant circuit (8; 108; 208; 308) further comprising a secondary expansion unit (10; 110; 210; 310) interposed between said first evaporator (3; 103; 203; 303) and said at least a second evaporator (9; 109, 117; 209, 217; 309).

2. Apparatus for drying a compressed gas as in claim 1, further comprising at least a defrosting circuit (11; 111, 122; 211, 222; 311) configured as a branch of said refrigerant circuit (8; 108; 208; 308) downstream said compressor (4; 104; 204; 304) and re-joined to said refrigerant circuit (8; 108; 208; 308) upstream the inlet of said at least a second evaporator (9; 109, 117; 209, 217; 309), the flow of said refrigerant along said defrosting circuit (11; 111, 122; 211, 222; 311) to carry out a defrosting cycle into said at least a second evaporator (9; 109, 117; 209, 217; 309) being controlled by at least a defrost valve (12; 112, 123; 212, 223; 312) interposed between said compressor (4; 104; 204; 304) and said at least a second evaporator (9; 109, 117; 209, 217; 309).

3. Apparatus for drying a compressed gas as in claim 2, wherein opening and closing of said at least a defrost valve (12; 112, 123; 212, 223; 312) to carry out said defrosting cycle is controlled by the pressure difference (ΔP; ΔPA, ΔPB) between the pressure (P1; P3) of said compressed gas at the inlet of said at least a second evaporator (9; 109, 117; 209, 217; 309) and the pressure (P2; P4) of said compressed gas at the outlet of said at least a second evaporator (9; 109, 117; 209, 217; 309), suitable pressure sensors (13, 14; 113, 114, 120, 121; 213, 214, 220, 221) being provided in said gas circuit (7; 107; 207; 307) respectively upstream and downstream said at least a second evaporator (9; 109, 117; 209, 217; 309).

4. Apparatus for drying a compressed gas as in claim 2, wherein opening and closing of said at least a defrost valve (12; 112, 123; 212, 223; 312) to carry out said defrosting cycle is controlled by at least a timer.

5. Apparatus for drying a compressed gas as in claim 1, comprising a third evaporator (117; 217) connected in parallel to said second evaporator (109; 209) both at said gas circuit (107; 207) and at said refrigerant circuit (108; 208), said second evaporator (109; 209) and third evaporator (117; 217) being arranged in series with respect to, and dowstream, said first evaporator (103; 203), said second evaporator (109; 209) and third evaporator (117; 217) being adapted to carry out, at the same time or alternately, a second heat exchange between said compressed gas and said refrigerant, the flow of compressed gas between said first evaporator (103; 203) and, respectively, said second evaporator (109; 209) and third evaporator (117; 217) being controlled by first valve means (118; 218) and, respectively, second valve means (119; 219).

6. Apparatus for drying a compressed gas as in claims 2 and 5, wherein said second evaporator (109; 209) and third evaporator (117; 217) are respectively connected to a first defrosting circuit (111; 211) and a second defrosting circuit (122; 222) configured as branches of said refrigerant circuit (108; 208) downstream said compressor (104; 204) and re-joined to said refrigerant circuit (108; 208) upstream the inlets of said second evaporator (109; 209) and third evaporator (117; 217), respectively, the flow of said refrigerant along said first defrosting circuit (111; 211) and second defrosting circuit (122; 222) being respectively controlled by a first defrost valve (112; 212) and a second defrost valve (123; 223) interposed between said compressor (104; 204) and the respective second evaporator (109; 209) and third evaporator (117; 217).

7. Apparatus for drying a compressed gas as any of the preceding claims, wherein said refrigerant circuit (308) comprises a by-pass circuit (327) controlled by a by-pass valve (328), said by-pass circuit (327) directly connecting the outlet of said first evaporator (303) to the inlet of said compressor (304).

8. Method for controlling a defrost cycle in a compressed gas dryer of the refrigeration type as in claims 1 to 3, comprising the steps of:
- pre-defining a maximum value (ΔPₘₐₓ) and a minimum value (ΔPₘᵢₙ) of the pressure difference (ΔP; ΔPA, ΔPB) between the inlet pressure (P1; P3) and the outlet pressure (P2; P4) of said compressed gas at said at least a second evaporator (9; 109, 117; 209, 217; 309);
- comparing said pressure difference (ΔP; ΔPA, ΔPB) with respect to said pre-defined maximum value (ΔPₘₐₓ);
- if said pressure difference (ΔP; ΔPA, ΔPB) is lower than said pre-defined maximum value (ΔPₘₐₓ), continuing the normal drying cycle of said compressed gas;
- if said pressure difference (ΔP; ΔPA, ΔPB) is higher than said pre-defined maximum value (ΔPₘₐₓ), starting a defrosting cycle by opening said at least a defrost valve (12; 112, 123; 212, 223; 312) to divert a portion of refrigerant exiting from said compressor (4; 104; 204; 304) along said at least a defrosting circuit (11; 111, 122; 211, 222; 311) and towards said at least a second evaporator (9; 109, 117; 209, 217; 309);
- comparing said pressure difference (ΔP; ΔPA, ΔPB) with respect to said pre-defined minimum value (ΔPₘᵢₙ) during said defrosting cycle;
- when said pressure difference (ΔP; ΔPA, ΔPB) is lower than said pre-defined minimum value (ΔPₘᵢₙ), closing said at least a defrost valve (12; 112, 123; 212, 223; 312) and terminating said defrosting cycle.

9. Method for controlling a defrost cycle in a compressed gas dryer of the refrigeration type as in claims 1, 2 and 4, comprising the steps of:
- pre-defining into said timer a first time interval (Δt_freeze; tfreez; tmax) corresponding to the time period between the end of a defrosting cycle and the starting of a subsequent defrosting cycle;
- pre-defining into said timer at least a second time interval (Δt_defro; tdefr, tdefrost; tmax) corresponding to the duration of a defrosting cycle;
- comparing the time (t) elapsed from the end of the last defrosting cycle or from the starting of the drying process with respect to said first pre-defined time interval (Δt_freeze; tfreez; tmax);
- if said elapsed time (t) is lower than said first pre-defined time interval (Δt_freeze; tfreez; tmax), continuing the normal drying cycle of said compressed gas;
- if said elapsed time (t) is higher than said first pre-defined time interval (Δt_freeze; tfreez; tmax) resetting said timer (t=0) and starting a defrosting cycle by opening said at least a defrost valve (12; 112, 123; 212, 223; 312) to divert a portion of refrigerant exiting from said compressor (4; 104; 204; 304) along said at least a defrosting circuit (11; 111, 122; 211, 222; 311) and towards said at least a second evaporator (9; 109, 117; 209, 217; 309);
- comparing the time (t) elapsed from the start of said defrosting cycle with respect to said at least a second time interval (Δt_defro; tdefr, tdefrost; tmax);
- if said elapsed time (t) is lower than said at least a second time interval (Δt_defro; tdefr, tdefrost; tmax) continuing said defrosting cycle;
- if said elapsed time (t) is higher than said at least a second time interval (Δt_defro; tdefr, tdefrost; tmax) closing said at least a defrost valve (12; 112, 123; 212, 223; 312) and terminating said defrosting cycle.
